# EUROPEAN PATENT APPLICATION

(11) **EP 4 726 459 A1**
(43) Date of publication of application: **15.04.2026**
(21) Application number: 24842286.7
(22) Date of filing: 12.07.2024
(51) Int. Cl.: G02B 27/01, B32B 3/08

(54) **DISPLAY WINDOW AND VEHICLE**

(30) Priority: 14.07.2023 CN 202310866742
(71) Applicant: Fuyao Glass Industry Group Co., Ltd., Fuqing, Fujian 350300 (CN)
(72) Inventor: HE, Changlong, Fujian 350300 (CN); CAI, Feng, Fujian 350300 (CN); ZHANG, Jianming, Fujian 350300 (CN); ZHANG, Canzhong, Fujian 350300 (CN); ZHANG, Wei, Fujian 350300 (CN)
(74) Representative: Herrero & Asociados, S.L.
(86) International application number: PCT/CN2024/105100
(87) International publication number: WO 2025/016293

(57) **Abstract**

A display window and a vehicle. The display window comprises: a glass body (10), a function display structure (20), and a crack isolation portion (30). The glass body (10) is provided with a light-transmitting area (101) and a shaded area (102) arranged in the circumferential direction of the light-transmitting area (101), the visible light transmittance of the light-transmitting area (101) being greater than or equal to 70%. At least one function display structure (20) is provided and is arranged in the shaded area (102). The crack isolation portion (30) is arranged between the glass body (10) and the function display structure (20), and the function display structure (20) is connected to the glass body (10) by means of the crack isolation portion (30). As the crack isolation portion (30) is arranged between the glass body (10) and the function display structure (20), when the glass body (10) cracks under a strong impact, the crack isolation portion (30) plays a role in isolation, and thus prevents cracks from extending to the function display structure (20), that is, no crack is observed on the function display structure (20), thereby realizing stable and reliable display, reducing temporary potential secondary hazards, and improving the safety and stability.

## Description

### CROSS-REFERENCE TO RELATED APPLICATIONS

This application claims priority to Chinese Patent Application No. 2023108667421, filed with the Chinese Patent Office on July 14, 2023 and entitled "DISPLAY VEHICLE WINDOW AND VEHICLE", the content of which is hereby incorporated by reference in its entirety.

### TECHNICAL FIELD

The present invention relates to the field of vehicle window glass technologies, and in particular, to a display vehicle window and a vehicle.

### BACKGROUND

With evolution of an intelligent network connection era, a vehicle may provide various types of information to a driver, for example, vehicle information, road information, and social media information. Generally, a vehicle head-up display (HUD), a dashboard, a central control panel, a secondary driving display, and a combination thereof may be used to achieve providing the aforementioned information, so as to meet multiple forms and multiple levels of display requirements, thereby bringing more comfort, security, intelligent experience, and rich information to the driver.

For the display of the dashboard and the central control screen, the driver needs to observe the dashboard and the central control screen and the visual line of the driver will leave the road briefly, thus causing hidden dangers of driving safety. For a conventional head-up display (HUD), a HUD image is displayed on a light transmission region of a front windshield, an external environment is used as a display background of the HUD image, ambient brightness outside the vehicle and other interference light affect the driver to observe the HUD image, thereby affecting driving safety and visual comfort.

### SUMMARY

According to various embodiments of the present invention, a display vehicle window and a vehicle are provided.

A display vehicle window includes a glass body, at least one function display structure and a crack isolation portion. The glass body is provided with a light transmission region and a shielding region arranged around a circumferential direction of the light transmission region. A visible light transmission of the light transmission region is greater than or equal to 70%. The at least one function display structure is provided in the shielding region. The crack isolation portion is arranged between the glass body and the function display structure. The function display structure is connected to the glass body via the crack isolation portion.

In one of the embodiments, the function display structure includes a reflection element and/or an image generation element.

In one of the embodiments, the shielding region includes a bottom shielding region located below the light transmission region, and the function display structure is arranged in the bottom shielding region.

In one of the embodiments, the glass body includes an outer glass plate, a first adhesive layer, and an inner glass plate that are sequentially stacked. The outer glass plate has a first surface and a second surface that are arranged away from each other. The inner glass plate has a third surface and a fourth surface that are arranged away from each other. The second surface is arranged opposite to the third surface. The glass body further includes a first optical barrier layer arranged in the bottom shielding region, and the first optical barrier layer is located between the second surface and the function display structure.

In one of the embodiments, a visible light transmission of the first optical barrier layer is less than or equal to 5%, and the first optical barrier layer is a dark printing layer or a dark polymer film.

In one of the embodiments, the first optical barrier layer is a dimming film, and a lowest visible light transmission of the dimming film is less than or equal to 5%.

In one of the embodiments, the inner glass plate is provided with at least one notch. The function display structure is provided in a corresponding notch. The function display structure is connected to the outer glass plate via the first adhesive layer. The function display structure is connected to the inner glass plate via the crack isolation portion.

In one of the embodiments, the inner glass plate is provided with at least one notch. The function display structure is provided on the fourth surface and covers a corresponding notch. The function display structure is connected to the outer glass plate via the first adhesive layer and the crack isolation portion.

In one of the embodiments, the inner glass plate is provided with no notch, and the function display structure is connected to the fourth surface via the crack isolation portion.

In one of the embodiments, the notch is a closed type through-hole or a non-closed type notch.

In one of the embodiments, an angle formed between the function display structure and the fourth surface is 0 to 90°.

In one of the embodiments, an angle formed between the function display structure and the fourth surface is 20° to 70°.

In one of the embodiments, the function display structure has a fifth surface and a sixth surface arranged away from each other. The fifth surface faces the second surface, and a distance between the sixth surface and the fourth surface is less than or equal to 10 mm.

In one of the embodiments, the crack isolation portion is at least one isolation hole provided on the inner glass plate, and the at least one isolation hole extends in a circumferential direction of the function display structure.

In one of the embodiments, at least two rows of the isolation holes are provided, and the isolation holes in adjacent rows are staggered.

In one of the embodiments, at least one of the first surface, the second surface, the third surface, and the fourth surface is provided with a stress weakening region, an HIC value of the glass body provided with the stress weakening region is less than 1000, and the function display structure and the stress weakening region are at least partially overlapped.

In one of the embodiments, the shielding region further includes a top shielding region located above the light transmission region and side shielding regions located on both sides of the light transmission region. Visible light transmissions of the top shielding region and the side shielding region are less than or equal to 5%.

A vehicle includes the aforementioned display vehicle window.

Details of one or more embodiments of the present invention are presented in the accompanying drawings and description below. Other features, objects and advantages of the present invention will become apparent from the specification, the accompanying drawings, and the claims.

### BRIEF DESCRIPTION OF THE DRAWINGS

FIG. 1 is a schematic front view of a vehicle window according to an embodiment of the present invention.
FIG. 2 is a sectional view taken along a line A-A of FIG. 1 according to an embodiment.
FIG. 3 is a sectional view taken along the line A-A of FIG. 1 according to another embodiment.
FIG. 4 is a schematic front view of a vehicle window according to another embodiment of the present invention.
FIG. 5 is a sectional view taken along a line B-B of FIG. 4 according to an embodiment.
FIG. 6 is a sectional view taken along a line B-B of FIG. 4 according to another embodiment.
FIG. 7 is a sectional view taken along a line B-B of FIG. 4 according to yet another embodiment.
FIG. 8 is a sectional view taken along a line B-B of FIG. 4 according to still another embodiment.
FIG. 9 is a schematic front view of a vehicle window according to yet another embodiment of the present invention.
FIG. 10 is a schematic view of a crack isolation portion shown in FIG. 9 according to an embodiment.
FIG. 11 is a schematic view of a crack isolation portion shown in FIG. 9 according to another embodiment.
FIG. 12 is a schematic front view of a vehicle window according to still another embodiment of the present invention.
FIG. 13 is a sectional view taken along a line C-C of FIG. 12 according to an embodiment.
FIG. 14 is a sectional view taken along a line C-C of FIG. 12 according to another embodiment.
FIG. 15 is a sectional view taken along a line C-C of FIG. 12 according to yet another embodiment.
FIG. 16 is a sectional view taken along a line C-C of FIG. 12 according to still another embodiment.

### Reference signs

10: glass body; 101: light transmission region: 102: shielding region; 1021: bottom shielding region; 1022: side shielding region; 1023: top shielding region; 11: outer glass plate; 111: first surface; 112: second surface; 12: first adhesive layer; 13: inner glass plate; 131: third surface: 132: fourth surface; 133: notch; 134: stress weakening region; 1341: concave portion; 14: first optical barrier layer; 15: second optical barrier layer; 16: second adhesive layer; 20: function display structure; 21: fifth surface; 22: sixth surface; 30: crack isolation portion; 31: isolation hole; 32: adhesive; 40: image light source.

### DETAILED DESCRIPTION OF THE EMBODIMENTS

To make the foregoing objects, features, and advantages of the present invention more obvious and easy to understand, the following describes a specific implementation manner of the present invention in detail with reference to the accompanying drawings. Many specific details are described in the following description to facilitate full understanding of the present invention. However, the present invention may be implemented in many different manners from those described herein. A person skilled in the art may make similar improvements without departing from the intension of the present invention. Therefore, the present invention is not limited to the specific embodiments disclosed below.

To overcome the disadvantages of the conventional instrument panel display, the central control panel display, and the head-up display (HUD), in the present invention, display is performed on a shielding region of the front windshield, especially on a bottom shielding region located between the instrument desk and the light transmission region of the front windshield of the vehicle, where the shielding region is used as a display background of a display image, and the conventional shielding region is printed by black opaque ceramic ink. Therefore, display on the shielding region is also referred to as black side display. Content on the black side display may be vehicle information such as vehicle speed, engine revolution, fuel consumption, tire pressure, dynamic navigation, night vision, actual scene map, warning information and entertainment information, and external intelligent device input information. Compared with the conventional head-up display (HUD), the black side display can improve a contrast between the display image and the display background, so that the display content observed by the human eyes is sufficiently clear, and energy consumption of a display element is reduced. Compared with the conventional dashboard display and the central control panel display, the black side display allows the human eyes to look less away from the road and reduce head turning movement, which greatly improves driving safety.

In a case of a frontal collision between a pedestrian and a vehicle, the head of the pedestrian may collide with the front windshield, which may cause serious or even fatal injury to the pedestrian. An evaluation manner and a requirement of the pedestrian protection head injury criteria (HIC) of the sandwich glass are determined in standards/regulations such as C-NCAP2021, E-NCAP2021, and ECE UN R127. To reduce the human injury when a collision occurs between the vehicle and the pedestrian and the like, the front windshield needs to be appropriately broken to meet various safety regulations requirements. Accordingly, the front windshield will break properly when it is hit by an internal shock to protect the personnel inside the vehicle. Whether it is broken or crushed, cracks may occur in the black side display region of the front windshield, resulting in interference or even inability to display on the black side display, which may lead to misjudgment of information or raise security risk in an emergency.

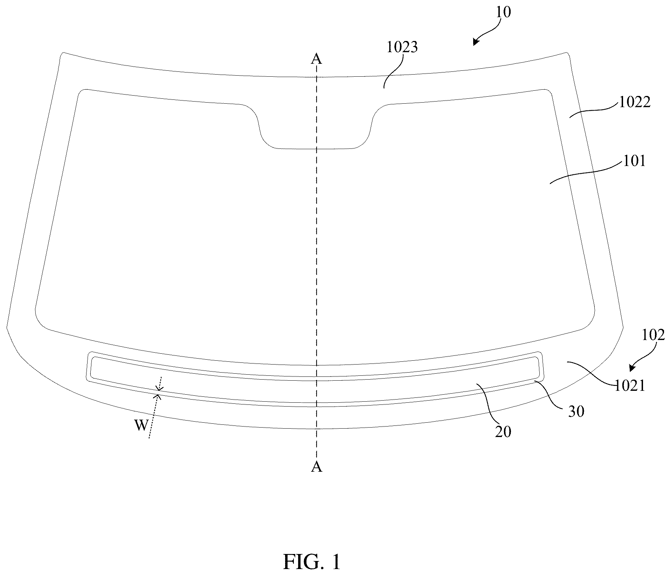

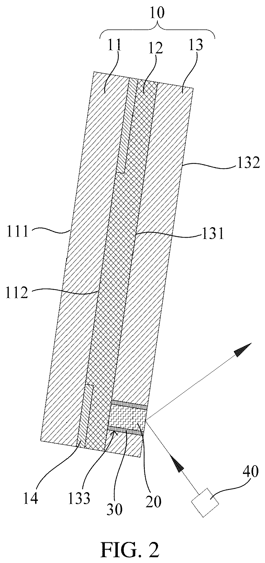

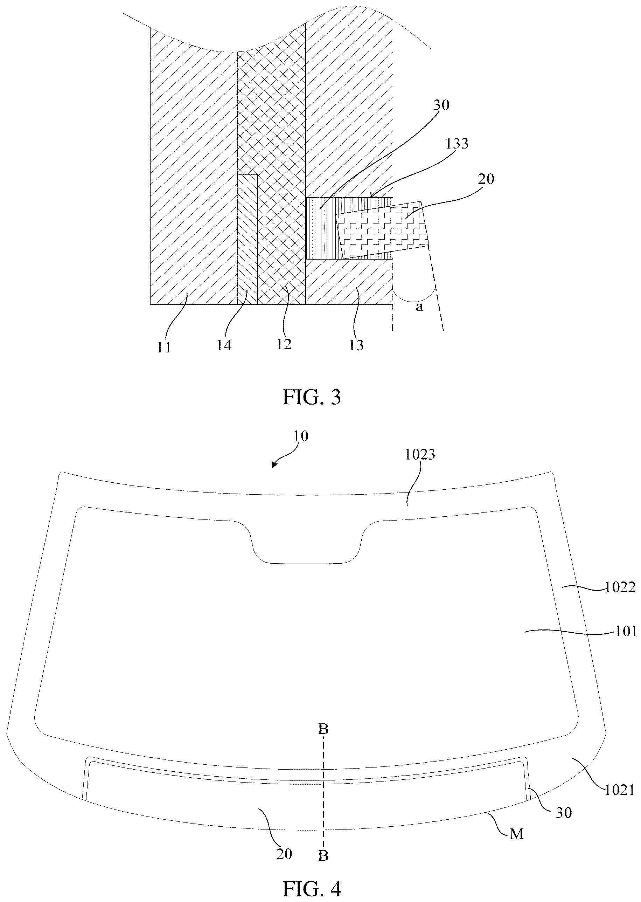

Referring to FIG. 1 to FIG. 3, FIG. 1 shows a schematic front view of a display vehicle window according to an embodiment of the present invention. FIG. 2 is a sectional view taken along a line A-A of FIG. 1 according to an embodiment. FIG. 3 is a sectional view taken along a line A-A of FIG. 1 according to another embodiment. An embodiment of the present invention provides a display vehicle window, which includes a glass body 10, a function display structure 20, and a crack isolation portion 30. The glass body 10 is provided with a light transmission region 101 and a shielding region 102 arranged around a circumferential direction of the light transmission region 101. A visible light transmission of the light transmission region 101 is greater than or equal to 70%. At least one function display structure 20 is provided in the shielding region 102. Optionally, the function display structure 20 is configured to display, for example, a driving parameter, including a vehicle speed, an engine revolution, fuel consumption, a tire pressure, warning information and a driving mileage. The function display structure 20 may be further configured to display weather temperature and entertainment information, and may also be used as dynamic navigation, night vision, a live scene map, and the like. The crack isolation portion 30 is arranged between the glass body 10 and the function display structure 20, and the function display structure 20 is connected to the glass body 10 via the crack isolation portion 30.

According to the aforementioned display vehicle window, since the crack isolation portion 30 is provided between the glass body 10 and the function display structure 20, when the glass body 10 encounters a strong impact and causes a crack, the crack isolation portion 30 can perform an isolation function, thus preventing the crack from extending to the function display structure 20, that is, no crack is observed on the function display structure 20, so that stability and reliability of display are achieved, and temporary potential secondary hazards are reduced, and security and stability are improved.

In an embodiment, the function display structure 20 is provided in the shielding region 102 of the glass body 10. The display vehicle window described in the present invention is a front windshield as an example, and the shielding region 102 is an opaque region of the front windshield. The function display structure 20 may be an integrated structure, or may be a plurality of function display structures 20 are arranged space apart from each other. For example, three function display structures 20 are provided, and the three function display structures 20 may be disposed on the bottom shielding region of the front windshield near the instrument panel, or may be disposed on the bottom shielding region near the instrument panel, the side shielding region near the pillar A, and the top shielding region near the interior rearview mirror, respectively.

Referring to FIG. 1 to FIG. 3, in an embodiment, the function display structure 20 may be a projection display component, and specifically includes a reflection element. The reflection element cooperates with the image light source 40, so that projected light of the image light source 40 is reflected to form a display image into human eyes.

When a plurality of function display structures 20 are provided, one image light source 40 may be adopted, which can emit a plurality of projection rays to different function display structures 20. Alternatively, a plurality of image light sources 40 may also be adopted, and each image light source separately transmits the projected light to the corresponding function display structure 20. In addition, all of the plurality of display images may be virtual images, or may be real images, or may be both virtual images and real images.

In another embodiment, the function display structure 20 may further be a self-luminous display component, and specifically includes an image generation element. After being illuminated, the image generation element directly transmits the displayed image to human eyes. The image generation element includes but is not limited to a light emitting plate, a thin film transistor display screen (TFT), an organic light emitting diode display screen (OLED), a silicon-based liquid crystal display screen (LCOS), a digital light processing display screen (DLP), a secondary millimeter light emitting diode display (Mini LED), a micro light emitting diode display (Micro LED), and the like.

In an embodiment, the plurality of function display structures 20 may further include both an image generation element and a reflection element, so that the plurality of function display structures 20 may be either self-luminous display or projection display in cooperation with the image light source 40.

Optionally, a ratio of P-polarized light in the projected light emitted by the image light source 40 is 30% to 100%, so that use of the polarized solar glasses is adapted to meet more driving scenario requirements.

In an embodiment, the shielding region 102 includes a bottom shielding region 1021 located below the light transmission region 101, and the function display structure 20 is arranged in the bottom shielding region 1021. Optionally, the shielding region 102 further includes a top shielding region 1023 located above the light transmission region 101 and side shielding regions 1022 located on both sides of the light transmission region 101. Visible light transmissions of the top shielding region 1023 and the side shielding region 1022 are less than or equal to 5%, more preferably less than or equal to 3%, and further preferably less than or equal to 1%.

Referring to FIG. 1 and FIG. 2, in an embodiment, the glass body 10 includes an outer glass plate 11, a first adhesive layer 12, and an inner glass plate 13 that are sequentially stacked. The outer glass plate 11 has a first surface 111 and a second surface 112 that are arranged away from each other, and the inner glass plate 13 has a third surface131 and a fourth surface132 that are arranged away from each other. The second surface 112 is arranged opposite to the third surface 131. The glass body 10 further includes a first optical barrier layer 14 disposed on the bottom shielding region 1021, and the first optical barrier layer 14 is located between the second surface 112 and the function display structure 20. Specifically, the first optical barrier layer 14 may be disposed on the second surface 112, inside the first adhesive layer 12, on the third surface 131, on the fourth surface 132, and/or a surface of the function display structure 20 facing the outer glass plate 11, which may be flexibly adjusted and arranged according to actual needs. The first optical barrier layer 14 may be used as the display background of the display image, so that the display image is not interfered with brightness of the vehicle external environment, and the display effect of the function display structure 20 is improved.

The first adhesive layer 12 is sandwiched between the second surface 112 and the third surface 131, and is configured to bond the outer glass plate 11 and the inner glass plate 13 together to form a sandwich glass structure. For example, the material thereof may be selected from polyvinyl butyraldehyde (PVB), vinyl acetate (EVA), ionic polymer film (SGP) and the like. Certainly, the first adhesive layer 12 may further have other functions, for example, at least one shaded region is used as a shadow band, so as to reduce interference caused by sunlight to a human eye, or an infrared absorber is added, so as to have a sun protection or a heat insulation function. The first adhesive layer 12 may further include at least two layers, a content of a plasticizer in one of the two layers is higher, so as to have a sound insulation function, or one of the two layers has a wedge shape, so as to form a HUD (HUD) function in the light transmission region 101.

In an embodiment, the glass body 10 further includes a second optical barrier layer 15 arranged on the bottom shielding region 1021. The second optical barrier layer 15 and the first optical barrier layer 14 are located on different surfaces, especially for example, the second optical barrier layer 15 is located on the second surface 112, and the first optical barrier layer 14 is located inside the first adhesive layer 12. Alternatively, for example, the second optical barrier layer 15 is located inside the first adhesive layer 12, and the first optical barrier layer 14 is located on a surface of the function display structure 20 facing the outer glass plate 11. Alternatively, further for example, the first optical barrier layer 14 is located on the second surface 112, and the second optical barrier layer 15 is located on the fourth surface 132. The second optical barrier layer 15 may cooperate with the first optical barrier layer 14 to form a bottom shielding region 1021, and the second optical barrier layer 15 and the first optical barrier layer 14 are overlapped at least partially in a thickness direction of the glass body 10 to achieve a better overall appearance.

In an embodiment, a visible light transmission of the first optical barrier layer 14 is less than or equal to 5%, more preferably less than or equal to 3%, further preferably less than or equal to 1%, or even less than or equal to 0.5%, or substantially 0%. The first optical barrier layer 14 is a dark printing layer or a dark polymer film. The second optical barrier layer 15 may also made of the dark printing layer or the dark polymer film that is consistent with the first optical barrier layer 14.

The dark printing layer may be a black or brown ceramic ink or an ultraviolet ink, and is printed on the second surface 112, the third surface 131, and the fourth surface 132 by using a process such as screen printing or ink jet printing.

In addition, the dark polymer film may be a noumenon colored polymer film, for example, a coloring component is added to the polymer film to obtain a black or brown PVB, PET, PVC, and the like; or a polymer film on which a pigment is printed, such as printing a black or brown pigment on a surface of the polymer film.

In another embodiment, the first optical barrier layer 14 is a dimming film. The dimming film may be a polymer dispersion liquid crystal film (PDLC), a suspended particle film (SPD), an electrochromic film (EC), a fuel liquid crystal film (LC), or the like.

In one embodiment, the lowest visible light transmission of the dimming film is less than or equal to 5%, such as 3%, 2%, 1%, 0.5%, 0%. In addition, the maximum visible light transmission of the dimming film is set as required, for example, 10%, 20%, 30%, 50%, 70%, and 80%.

Specifically, for example, the visible light transmission of the dimming film may be adjusted from 0% to 20%, may be adjusted from 0.5% to 50%, or may be adjusted from 0% to 70%.

Requirements for visible light transmission in a plurality of scenarios are meet. For example, when the black side display needs to be performed, the dimming film is in an opaque state (the visible light transmission is less than or equal to 5%), so as to increase contrast between the display image and the display background. When no display is performed, the dimming film is in a transparent state (visible light transmission is greater than or equal to 70%), thereby implementing a greater area of transparency on the glass body 10.

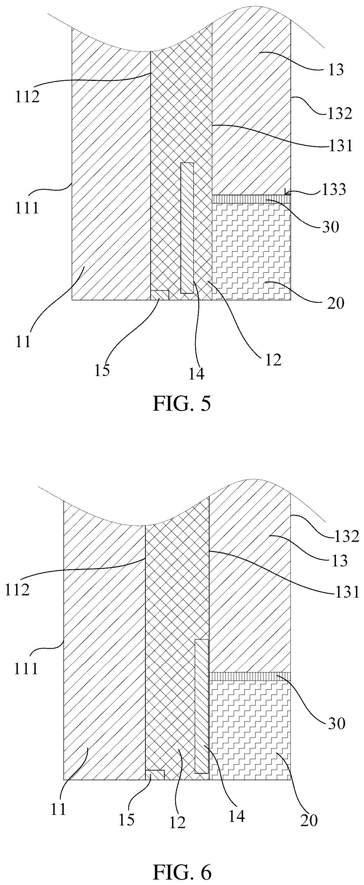

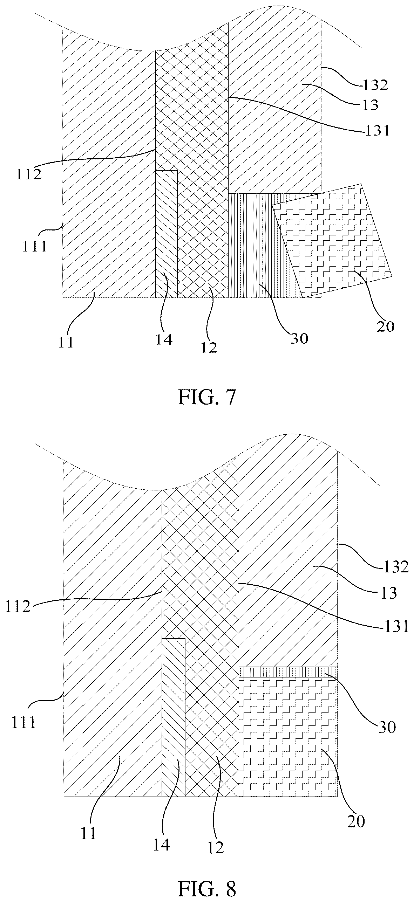

Referring to FIG. 1 to FIG. 3 or FIG. 4 to FIG. 8, FIG. 4 shows a schematic front view of a vehicle window according to another embodiment of the present invention. FIG. 5 to FIG. 8 respectively show schematic cross-sectional views of several different embodiments along a line B-B in FIG. 4. In an embodiment, the inner glass plate 13 is provided with at least one notch 133. The function display structure 20 is provided in a corresponding notch 133. The function display structure 20 is connected to the outer glass plate 11 via the first adhesive layer 12. The function display structure 20 is connected to the inner glass plate 13 via the crack isolation portion 30. Specifically, the crack isolation portion 30 is disposed between the notch wall of the notch 133 and the peripheral contour of the function display structure 20. In this way, on the one hand, the crack can be prevented from being transmitted from the outer glass plate 11 to the function display structure 20 via the crack isolation portion 30. On the other hand, because the function display structure 20 is connected to the outer glass plate 11 via the first adhesive layer 12, the function display structure 20 and the outer glass plate 11 can be connected and fixed, and the crack can be prevented from being transmitted from the outer glass plate 11 to the function display structure 20 via the first adhesive layer 12.

Referring from FIG. 1 to FIG. 3, in an embodiment, the notch 133 is a closed type through hole. As such, to implement mutual isolation between the inner glass plate 13 and the function display structure 20, the crack isolation portion 30 is correspondingly provided as a closed structure, so that the function display structure 20 can be effectively embedded into the glass body 10, so as to implement an integrated structure and better prevent a crack generated by the glass body 10 from extending to the function display structure 20.

It should be noted that the closed type through-hole refers to that a point in the closed type through-hole is selected as a start point, and when one moves from the start point in an extension direction of an inner wall of the closed type through-hole, it can finally return to the start point. On the contrary, the non-closed type notch refers to that a point on the notch wall of the non-closed type notch is selected as a start point, and when one moves from the start point in an extension direction of notch wall of the non-closed type notch, it cannot return to the start point.

The closed type through-hole has a shape including but not limited to a regular shape such as a circle, an ellipse, a square, or a pentagon, and other irregular shapes. In addition, the non-closed type notch includes but is not limited to C-shaped, L-shaped, V-shaped, and the like.

Referring from FIG. 4 to FIG. 8, in an embodiment, the notch 133 is a non-closed type through hole. Accordingly, the crack isolation portion 30 is provided as a non-closed structure, both ends of the crack isolation portion 30 extend to an edge M of the glass body 10, and the function display structure 20 is located in a region formed by the crack isolation portion 30 and the edge M of the glass body 10. As such, the non-closed type structure can separate the function display structure 20 from the glass body 10, so as to better prevent the crack generated by the glass body 10 from extending to the function display structure 20.

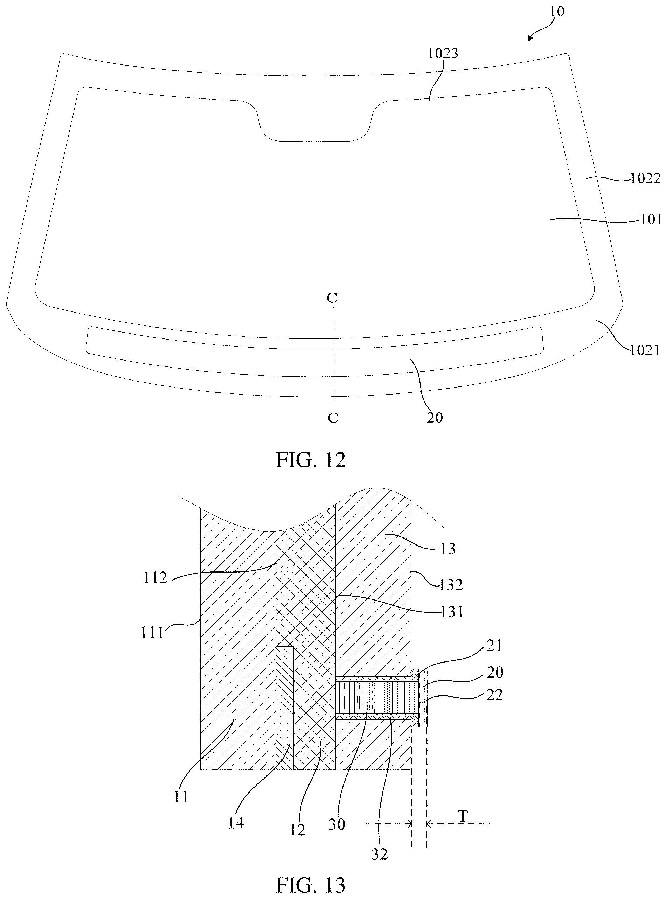

Referring to FIG. 12 and FIG. 13, in an embodiment, the inner glass plate 13 is provided with at least one notch 133, the function display structure 20 is provided on the fourth surface 132 and covers a corresponding notch 133, and the function display structure 20 is connected to the outer glass plate 11 via the crack isolation portion 30 and the first adhesive layer 12. As such, under an adhesive force between the crack isolation portion 30 and the first adhesive layer 12, the function display structure 20 can be stably connected to the glass body 10, and serves as an elastic support function, so as to avoid that when the function display structure 20 is mounted and hang in the air, a displacement of a reflection surface or an inclination defect may occur, so that optical reflection stripes of the whole surface of the glass can be coordinated and consistent. Specifically, the crack isolation portion 30 is disposed in the notch 133, and a gap is provided between the circumferential outer contour of the crack isolation portion 30 and the notch wall of the notch 133. An adhesive 32 is filled in the gap, and the crack isolation portion 30 is fixedly connected to the interior of the notch 133 via the adhesive 32.

Referring to FIG. 2, FIG. 5, FIG. 13, or FIG. 16, in an embodiment, the function display structure 20 has a fifth surface 21 and a sixth surface 22 that are disposed away from each other. The fifth surface 21 faces the fourth surface 132, the sixth surface 22 is away from the fourth surface 132. The distance between the sixth surface 22 and the fourth surface 132 is set as T, and T is less than or equal to 10 mm. Specifically, T includes but is not limited to 0mm, 0.2 mm, 0.5 mm, 2 mm, 5 mm, 8 mm, and 10 mm. When T is 0, that is, the sixth surface 22 and fourth surface 132 are flush with each other, which can improve a product appearance, and hands are not easily scratched. On the contrary, when T is greater than 0, a stacked step is formed to meet different usage scenario requirements.

In an embodiment, the crack isolation portion 30 includes a soft sealing material. When the soft sealing material is separately connected to the glass body 10 and the function display structure 20, according to one aspect, a flexible connection can be implemented, so that a crack generated when the inner glass plate 13 is broken can be better isolated from invading the function display structure 20; on the other hand, the crack isolation portion 30 can serve as sealing, which can prevent dust, rain and foreign matter from entering. Specifically, the soft sealing material includes but is not limited to polyurethane (PU), polyethylene terephthalate (PET), polyvinyl chloride (PVC), polyvinyl butyral (PVB), and ternary ethylene propylene rubber (EPDM).

In an embodiment, a width of the crack isolation portion 30 is set as W. When the crack isolation portion 30 is located between the inner wall of the notch 133 and the circumferential outer contour of the function display structure 20, the width W is the size of the distance between the notch wall of the notch 133 of the inner glass plate 13 and the outer contour of the function display structure 20. For example, the width W is set as W≤30mm, specifically for example, W is 15 mm, 10 mm, 5 mm, 2.0 mm, 1.0 mm, or 0.5 mm, or may be flexibly adjusted and set to another value according to an actual requirement.

It should be noted that a width W of each part of the crack isolation portion 30 in an extension direction of the crack isolation portion 30 may be a uniform spacing, or may be a non-uniform spacing.

In an embodiment, a bending radius R of the crack isolation portion 30 on a plane should be as large as possible, so as to reduce a rupture probability of the glass in a processing process. Generally, the bending radius R is set as R≥10mm, for example, R is 20 mm, 50 mm, 100 mm, 500 mm, 1000mm, 5000mm, 10000mm and so on.

The following specifically uses an example in which the function display structure 20 includes a reflection element for description.

In an embodiment, the function display structure 20 includes a reflection element. The reflection element may be a single layer, or may be a multi-layer structure. A single-layer sheet structure is used as an example. A thickness of the reflection element is generally and probably equal to a thickness of the inner glass plate 13, and a thickness of the reflection element is set as, for example, ≤2.5mm, such as, 2.0 mm, 1.0 mm, or 0.5 mm. Specifically, the reflection element may be flexibly adjusted and disposed according to actual requirements.

In an embodiment, the reflection element may be made of the same material as or different material from the inner glass plate 13, and the material may be a single medium or a composite material.

It should be noted that a primary reflection surface of the reflection element is configured to reflect the projected light, and the primary reflection surface may be located inside the reflection element, or may be located on any surface of the reflection element, which may be specifically set according to actual situations.

In an embodiment, the reflection element may be a single-layer structure, or may be a multi-layer structure. Specifically, the reflection element may be monolithic physical glass, monolithic chemical glass, sandwich glass, polycarbonate (PC), polymethyl methacrylate (PMMA), transparent substrate or an opaque substrate on which a P-polarized light reflection coating is deposited, a multi-layer resin laminate, or the like.

In an embodiment, the reflection element may be a polarization conversion composite layer, which can implement mutual conversion between P-polarized light and S-polarized light. Specifically, a 1/2 wave plate, a laminate of 1/2 wave plate and circular polarized light reflection plate, a 1/4 wave plate, and a laminate of 1/4 wave plate and circular polarized light reflection plate may be used as examples.

In an embodiment, the reflection element is a composite layer with a holographic film. As such, non-specular reflection is implemented, and the light source has more flexible incident angle setting.

In some embodiments, the inner glass plate 13 is adjacent to an edge of the crack isolation portion 30, and the flaw is prevented by, for example, forming a chamfered angle, a rounded side, or the like by grinding edge processing. Similarly, the function display structure 20 is adjacent to an edge of the crack isolation portion 30 in a form of a chamfered angle, a rounded side, or the like.

In an embodiment, the first optical barrier layer 14 may have an electric heating element on a side thereof adjacent to an inner side of the vehicle. The electric heating element includes but is not limited to a wire, a copper foil, a printed silver paste, a transparent conductive layer, and the like, so as to implement power-on heating and defrosting on the function display structure 20.

In an embodiment, a transparent conductive layer is provided on the second surface 112 of the outer glass plate 11, and the transparent conductive layer has a thermal insulation function of reflecting infrared rays, or a heating function may be implemented by applying a current to the transparent conductive layer. The electric heating element and the transparent conductive layer are independent elements, which may have different input voltages, conductive connectors, and different power densities.

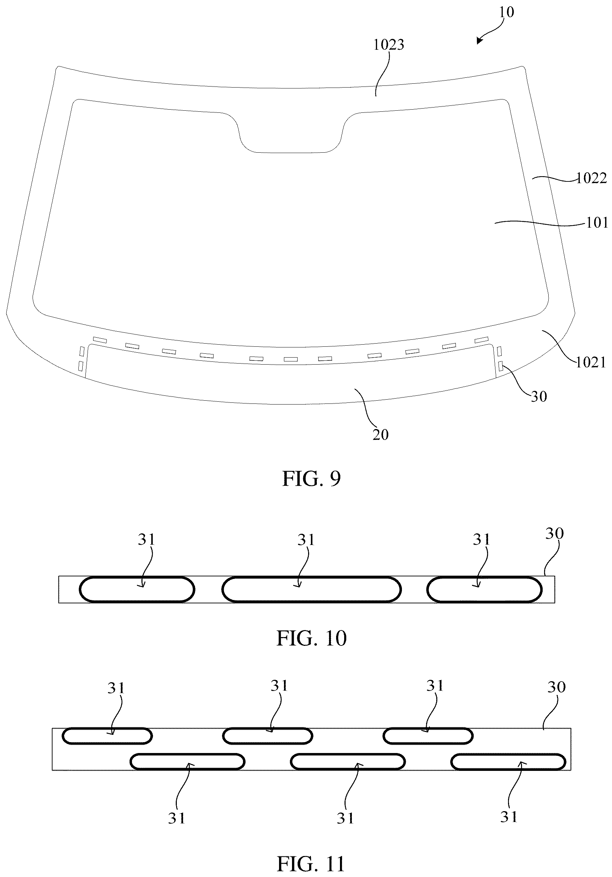

Referring from FIG. 9 to FIG. 11, in an embodiment, the crack isolation portion 30 is, for example, at least one isolation hole 31 provided on the inner glass plate 13, and the at least one isolation hole 31 extends in a circumferential direction of the function display structure 20. The function display structure 20 has the same material as that of the inner glass plate 13, and the function display structure 20 and the inner glass plate 13 form an integrated structure. Specifically, the crack isolation portion 30 is formed with a plurality of isolation holes 31 along an extension direction thereof. As such, when the inner glass plate 13 is broken and causes the crack, the isolation hole 31 serves as an isolation, thereby preventing the crack from extending to the function display structure 20. Specifically, the isolation hole 31 extends through the third surface 131 and the fourth surface 132 of the inner glass plate 13 in a direction perpendicular to the outer glass plate 11.

In some embodiments, the shape of the isolation hole 31 is not limited, and a basic shape thereof may have a circular shape, a waist-shaped hole, an oval shape, a square shape, a rectangular shape, a diamond shape, a trapezoidal shape, or the like, and a combined shape thereof.

In an embodiment, at least one row of the isolation holes 31 are provided, and each row includes a plurality of isolation holes 31.

The isolation holes 31 may be arranged in a row, as shown in FIG. 10. In addition, the isolation holes 31 may be further arranged in at least two rows. As shown in FIG. 11, each of the isolation holes 31 in two adjacent rows are staggered. Specifically, any one of the isolation holes 31 in one of the rows is arranged corresponding to an interval part between two isolation holes 31 in another adjacent row, so that a crack diffusion prevention capability can be improved.

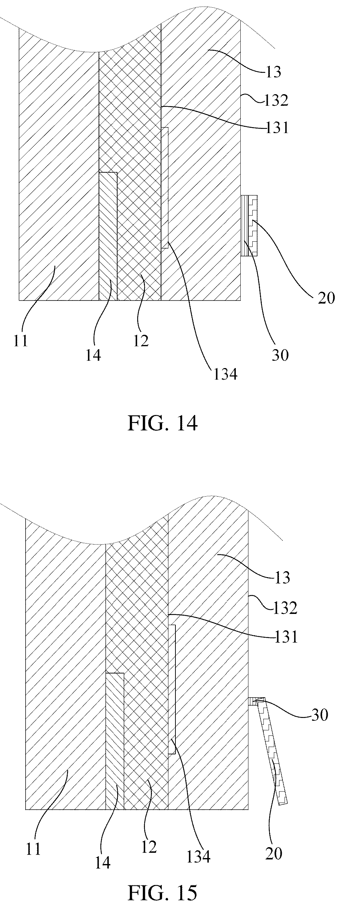

Referring to FIG. 12, and FIG. 14 to FIG. 16, in an embodiment, no notch 133 is provided on the inner glass plate 13, and the function display structure 20 is connected to the fourth surface 132 via the crack isolation portion 30. Specifically, the crack isolation portion 30 can not only be connected to and fixed to the function display structure 20, but also prevent the crack from invading the function display structure 20 from the inner glass plate 13.

Considering that the function display structure 20 increases the overall thickness and strength of the corresponding part of the glass body 10, under the same conditions, the thicker the glass body 10, the higher the value of the pedestrian protection head injury index (HIC), which will have a negative effect.

In an embodiment, at least one of the first surface 111, the second surface 112, the third surface 131, and the fourth surface 132 is provided with a stress weakening region 134, an HIC value of the glass body 10 with the stress weakening region 134 is set as less than 1000, and the function display structure 20 and the stress weakening region 134 are at least partially overlapped. Optionally, the function display structure 20 is arranged in the stress weakening region 134. In this way, by adding the stress weakening region 134 on the glass body 10, the overall strength can be moderately reduced, which is conducive to pedestrian protection.

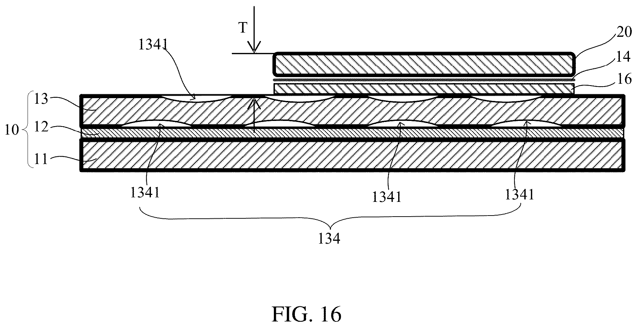

Referring to FIG. 16, in an embodiment, a surface of the outer glass plate 11 and/or the inner glass plate 13 corresponding to the stress weakening region 134 is provided with one or more concave portions 1341. As such, by providing the concave portion 1341, a part of the stress weakening region 134 can be thinned, and overall strength can be moderately reduced. In addition, the structure is simple and easy to process.

Referring to FIG. 16, in an embodiment, for example, any side surface of the outer glass plate 11 or the inner glass plate 13 is etched by using a laser to form the concave portion 1341 with a certain depth. The specific shape of the concave portion 1341 is not limited. A basic shape may be a circular shape, a waist-shaped hole, an oval shape, a square shape, a rectangle shape, a diamond shape, a trapezoidal shape, or a combination thereof. A specification of the basic shape is generally, for example, 0.5mm to 30mm. Each concave portion 1341 may be arranged at intervals or may be arranged in a continuous manner.

In an embodiment, a hard abrasive such as a sand paper or polishing powder may be used to grind the glass surface, so as to form a micro crack of a certain depth, and roughness Ra is generally <200µm.

Referring to FIG. 3, FIG. 7, or FIG. 15, in an embodiment, when the function display structure 20 is, for example, an active display structure, an angle formed between a display surface of the function display structure 20 and the fourth surface 132 is 0 to 90°. Specifically, the angle formed between the display surface of the function display structure 20 and the fourth surface 132 is 20° to 70°. As such, the display surface of the function display structure 20 faces human eyes, which is more easily to be observed.

Referring from FIG. 1 to FIG. 3, in an embodiment, a vehicle including a display vehicle window in any one of the foregoing embodiments is provided.

According to the aforementioned vehicle, since the crack isolation portion 30 is provided between the glass body 10 and the function display structure 20, when the glass body 10 encounters a strong impact and causes a crack, the crack isolation portion 30 performs an isolation function, thus preventing the crack from extending to the function display structure 20, that is, no crack is observed on the function display structure 20, so that stability and reliability of display are achieved, and temporary potential secondary hazards are reduced, and security and stability are improved.

The above embodiments merely illustrate several embodiments of the present invention, and the description thereof is specific and detailed, but it shall not be constructed as limiting the scope of the disclosure. It should be noted that, for a person of ordinary skill in the art, several variations and improvements may be made without departing from the concept of the present invention, and these are all within the protection scope of the present invention. Therefore, the protection scope of the present invention shall be subject to the appended claims.

## Claims

1. A display vehicle window, comprising:
a glass body provided with a light transmission region and a shielding region arranged around a circumferential direction of the light transmission region, and a visible light transmission of the light transmission region being greater than or equal to 70%;
at least one function display structure provided in the shielding region; and
a crack isolation portion arranged between the glass body and the function display structure, and the function display structure being connected to the glass body via the crack isolation portion.

2. The display vehicle window according to claim 1, wherein the function display structure comprises a reflection element and/or an image generation element.

3. The display vehicle window according to claim 1 or 2, wherein the shielding region comprises a bottom shielding region located below the light transmission region, and the function display structure is arranged in the bottom shielding region.

4. The display vehicle window according to claim 3, wherein the glass body comprises an outer glass plate, a first adhesive layer, and an inner glass plate that are sequentially stacked; the outer glass plate has a first surface and a second surface that are arranged away from each other, the inner glass plate has a third surface and a fourth surface that are arranged away from each other, the second surface is arranged opposite to the third surface; the glass body further comprises a first optical barrier layer arranged in the bottom shielding region, and the first optical barrier layer is located between the second surface and the function display structure.

5. The display vehicle window according to claim 4, wherein a visible light transmission of the first optical barrier layer is less than or equal to 5%, and the first optical barrier layer is a dark printing layer or a dark polymer film.

6. The display vehicle window according to claim 4 or 5, wherein the first optical barrier layer is a dimming film, and a lowest visible light transmission of the dimming film is less than or equal to 5%.

7. The display vehicle window according to any one of claims 4 to 6, wherein the inner glass plate is provided with at least one notch, the function display structure is provided in a corresponding notch, the function display structure is connected to the outer glass plate via the first adhesive layer, and the function display structure is connected to the inner glass plate via the crack isolation portion.

8. The display vehicle window according to any one of claims 4 to 6, wherein the inner glass plate is provided with at least one notch, the function display structure is provided on the fourth surface and covers a corresponding notch, and the function display structure is connected to the outer glass plate via the first adhesive layer and the crack isolation portion.

9. The display vehicle window according to any one of claims 4 to 6, wherein the inner glass plate is provided with no notch, and the function display structure is connected to the fourth surface via the crack isolation portion.

10. The display vehicle window according to claim 7 or 8, wherein the notch is a closed type through-hole or a non-closed type notch.

11. The display vehicle window according to any one of claims 7 to 9, wherein an angle formed between the function display structure and the fourth surface is 0 to 90°.

12. The display vehicle window according to claim 8 or 9, wherein an angle formed between the function display structure and the fourth surface is 20° to 70°.

13. The display vehicle window according to any one of claims 7 to 9, wherein the function display structure has a fifth surface and a sixth surface arranged away from each other, the fifth surface faces the second surface, and a distance between the sixth surface and the fourth surface is less than or equal to 10 mm.

14. The display vehicle window according to any one of claims 4 to 13, wherein the crack isolation portion is at least one isolation hole provided on the inner glass plate, and the at least one isolation hole extends in a circumferential direction of the function display structure.

15. The display vehicle window according to claim 14, wherein at least two rows of the isolation holes are provided, and the isolation holes in adjacent rows are staggered.

16. The display vehicle window according to any one of claims 4 to 13, wherein at least one of the first surface, the second surface, the third surface, and the fourth surface is provided with a stress weakening region, an HIC value of the glass body provided with the stress weakening region is less than 1000, and the function display structure and the stress weakening region are at least partially overlapped.

17. The display vehicle window according to any one of claims 3 to 16, wherein the shielding region further comprises a top shielding region located above the light transmission region and side shielding regions located on both sides of the light transmission region, and visible light transmissions of the top shielding region and the side shielding region are less than or equal to 5%.

18. A vehicle, comprising the display vehicle window according to any one of claims 1 to
